# EUROPÄISCHE PATENTSCHRIFT

(11) **EP 0 587 919 B1**
(45) Veröffentlichungstag und Bekanntmachung des Hinweises auf die Patenterteilung: **13.12.1995**
(21) Anmeldenummer: 92114236.0
(22) Anmeldetag: 20.08.1992
(51) Int. Cl.: G06F 11/00, G06F 1/32

(54) **Steuerung, insbesondere für eine Kraftfahrzeug-Schliessanlage**
Control system, particularly for the locking system of an automotive vehicle
Dispositif de commande, particulièrement pour une installation de fermeture d'un véhicule automobile

(43) Veröffentlichungstag der Anmeldung: 23.03.1994
(73) Patentinhaber: SIEMENS AKTIENGESELLSCHAFT, 80333 München (DE)
(72) Erfinder: Grassmann, Norbert, Dipl.-Ing., W-8400 Regensburg (DE); Sedlmeier, Martin, Dipl.-Ing. (FH), W-8426 Mendorf (DE)

(56) Entgegenhaltungen:
- WO-A-90/06552
- ELEKTRONIK Bd. 38, Nr. 4, 17. Februar 1989, München, DE, Seiten 48-56, THOMAS HILL et al.: 'Mikrocomputer in Kfz-Anwendungen'

## Beschreibung

Die Erfindung betrifft eine Steuerung nach dem Oberbegriff von Anspruch 1.

Eine solche Steuerung kann z.B. in einer Kraftfahrzeug-Schließanlage verwendet werden, die eine Zentralverriegelung mit Fernbedienung und gfs. mit einer Diebstahlwarnanlage einschließt. Die Steuerung enthält einen Mikroprozessor und eine Überwachungsschaltung, üblicherweise als Watchdog bezeichnet, durch die der Mikroprozessor im Falle einer Fehlfunktion in einen definierten Ausgangszustand rückgesetzt wird. Bei normaler Funktion des Mikroprozessors triggert dieser den Watchdog in vorgegebenen Zeitabständen und verhindert so das Aussenden eines Rücksetzsignals (WO91/00569).

Bei Mikroprozessor-Steuerungen, die in wiederkehrenden Zeitabständen Auswertungen durchführen müssen, für die aber ein möglichst geringer Stromverbrauch gefordert wird, muß der Mikroprozessor zwischen den Auswertungen in den Stoppmodus geschaltet werden, in dem auch der Zeitgeber des Mikroprozessors angehalten ist. Dadurch könner aber keine sich über mehrere Auswertezyklen erstreckende exakte Zeitmessungen durchgeführt werden, da als Zeitbasis nur die ungenaue Zeitkonstante, z.B. durch die Ladezeit eines Kondensators festgelegt, des externen Watchdogs zur Verfügung steht. Genaue Zeitmessungen ließen sich nur durchführen, wenn teuere Bauteile in den zeitbestimmenden Komponenten oder zusätzliche Zeitmeßeinrichtungen vorgesehen werden (WO90/06555).

Der Erfindung liegt die Aufgabe zugrunde, eine Steuerung der eingangs genannten Art zu schaffen, die einen geringen Strombedarf hat und doch exakte Zeitmessungen ermöglicht. Diese Aufgabe wird erfindungsgemäß durch eine Steuerung mit den Merkmalen von Anspruch 1 gelöst. Vorteilhaft ist insbesondere, daß die Lösung ohne Verwendung zusätzlicher, aufwendiger Zeitmeßbauteile erreicht werden kann.

Zweckmäßige Weiterbildungen der Erfindung sind in den Unteransprüchen festgelegt.

Ein Ausführungsbeispiel der Erfindung wird im folgenden anhand der Zeichnung erläutert. Es zeigen:
- Figur 1: eine erfindungsgemäße Steuerung als Blockschaltbild und
- Figur 2: Signaldiagramme, die der Erläuterung der erfindungsgemäßen Steuerung dienen.

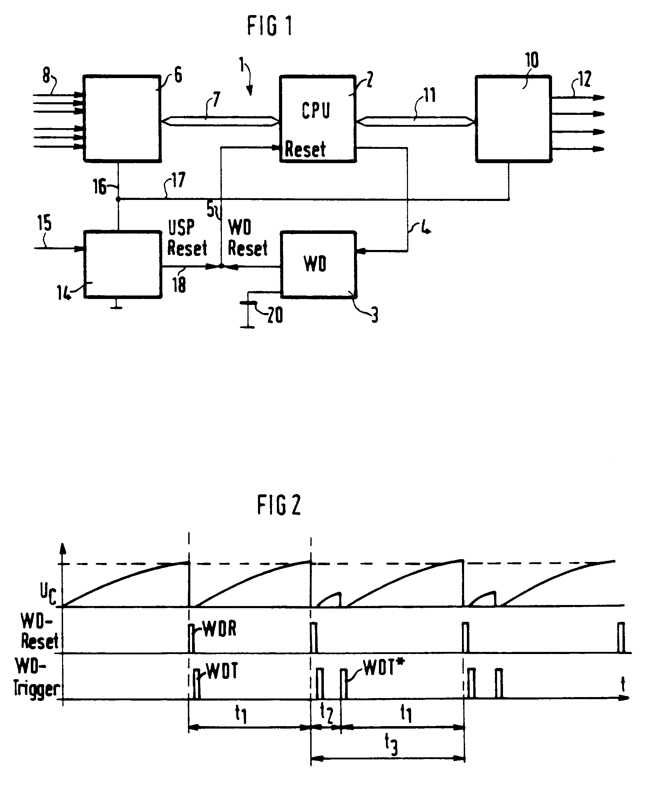

Eine Steuerung 1 (Figur 1) für eine Kraftfahrzeug-Schließanlage - die aber auch für andere Steuerungszwecke verwendet werden kann - weist einen Mikroprozessor oder CPU 2 und eine Überwachungsschaltung oder Watchdog (im folgenden abgekürzt auch WD) 3 auf, die durch eine Triggersignal-Leitung 4, die einen Signalausgang von 2 an einen Triggereingang von 3 legt, und durch eine Rücksetzsignal- oder Reset-Leitung 5, die einen Signalausgang von 3 an den RESET-Eingang von 2 legt, miteinander verbunden sind.

Eine Signalaufbereitungs-Schaltung 6 ist über einen Bus 7 mit den Signaleingängen des Mikroprozessors 2 verbunden.

Über Eingangsleitungen 8 werden der Signalaufbereitungs-Schaltung die von der Steuerung 1 zu verarbeitenden Signale, z.B. Türkontakts-, Schließ-, Beleuchtungs-, Einbruchmelde-Signale und dergleichen, zugeführt. Eine oder mehrere Endstufen 10 sind über einen Bus 11 mit dem Ausgang des Mikroprozessors 2 verbunden. Über Ausgangsleitungen 12 werden den zu steuernden Einrichtungen - z.B. Türschlösser, Lampen und dergleichen - Steuersignale zugeführt.

Ein Netzteil 14, das über eine Versorgungsleitung 15 und Masse mit einer nicht dargestellten Spannungsquelle verbunden ist, versorgt die Bestandteile der Steuerung über Leitungen 16, 17 mit der nötigen Energie. Über eine zweite Rücksetz- oder Reset-Leitung 18, die über die Leitung 5 ebenfalls mit dem Rücksetzeingang RESET des Mikroprozessors 2 verbunden ist, setzt das Netzteil 5 den Mikroprozessor 2, nachdem nach einem Abfall oder Ausfall der Versorgungsspannung diese Spannung wieder einen vorgegebenen Schwellwert erreicht hat, mit einem Signal USP-Reset in einen definierten Ausgangszustand zurück.

Die Kapazität eines Kondensators 20 bestimmt die Watchdog-Zeit, d.h. die Zeitspanne t₁ (Fig. 2), nach der der Watchdog 3 den Mikroprozessor 2 in den definierten Ausgangszustand rücksetzt, wenn der Watchdog 3 nicht in regelmäßigen Zeitabständen, die unter der Zeitdauer t₁ liegen müssen, von dem Mikroprozessor durch ein Triggersignal WDT über die Leitung 4 angestoßen, d.h. im Falle eines zeitbestimmenden RC-Glieds, entladen wird.

Die Watchdog-Zeit t₁, d.h. die Zeitspanne zwischen dem Empfang eines WD-Triggersignals durch den Watchdog 3 und der nachfolgenden Aussendung eines WD-Reset-Signals WDR durch den Watchdog 3, wird erfindungsgemäß gemessen und mit der zugehörigen Soll-Zeitspanne t₃ verglichen. Das Vergleichsergebnis, d.h. die Differenz t₂ zwischen Sollzeit und Watchdog-Zeit wird zur Bestimmung eines definiert versetzten Triggerzeitpunkts verwendet. Zu diesem um t₂ versetzten Triggerzeitpunkt sendet der Mikroprozessor 2 ein Abgleichs-Triggersignal WDT* an den Watchdog 3, das bei diesem einen Zeitabgleich bewirkt. Wird dieser Vorgang in bestimmten Zeiträumen wiederholt, so können Zeitabweichungen durch den Temperaturgang und die Alterung der Schaltungsbestandteile des Watchdogs 3 ausgeglichen werden. Die Genauigkeit der Watchdog-Zeit liegt dann im Bereich der Quarz- oder Resonator-Toleranz des Mikroprozessors 2.

Der zeitliche Verlauf der vorstehend erwähnten Signale und die genannten Zeitspannen sind aus Figur 2 ersichtlich. In dieser sind als Ordinate aufgetragen:
- t₁:: durch Schaltungsbestandteile definierte Watchdog-Periode oder Zeitspanne
- t₂:: durch den Mikroprozessor ermittelte Abgleichszeit
- t₃:: durch den Mikroprozessor abgeglichene Watchdog-Periode oder Zeitspanne
- U_{C}:: Spannung an dem Kondensator eines RC-Glieds in dem Watchdog
- WD-Reset:: Reset-Signale der Watchdog-Schaltung
- WD-Trigger:: von dem Mikroprozessor an die Watchdog-Schaltung abgegebene Triggersignale

In dem Beispiel nach Figur 2 ist die tatsächliche Watchdog-Periode t₁ kleiner als die Soll-Zeitdauer oder abgeglichene Watchdog-Periode t₃. Damit wird jeweils ein um die Abgleichszeit t₂ versetztes zusätzliches Watchdog-Abgleichs-Triggersignal WDT* abgegeben. Ist dagegen die von dem Mikroprozessor definierte Abgleichszeit t₃ kleiner als die Watchdog-Periode t₁, so wird das normale WD-Triggersignal WDT durch das Abgleichs-Triggersignal WDT* ersetzt.

Mit der beschriebenen Steuerung werden sind somit trotz stromsparenden Betriebs der gesamten Schaltungsanordnung genaue Zeitmessungen über längere Zeiträume möglich. Teuere Zeitmeßbausteine werden dazu nicht benötigt.

## Patentansprüche

1. Steuerung (1), insbesondere für eine Kraftfahrzeug-Schließanlage, mit einem Mikroprozessor (2) und einer Überwachungsschaltung(3), durch die der Mikroprozessor (2) im Falle einer Fehlfunktion in einen definierten Ausgangszustand rückgesetzt und die von dem Mikroprozessor (2) in vorgegebenen Zeitabständen durch ein Triggersignal (WDT) angestoßen wird,
**dadurch gekennzeichnet**,
- daß durch den Mikroprozessor (2) die Zeitdauer (t₁) zwischen zwei Rücksetzsignalen der Überwachungsschaltung (3) gemessen und mit einer Soll-Zeitdauer (t₃) verglichen wird,
- daß die Differenzzeit (t2) zwischen der gemessenen Zeitdauer (t₁) und der Soll-Zeitdauer (t₃) gebildet wird und
- daß die Überwachungsschaltung (3) mit einem um die Differenzzeit (t2) verschobenen Abgleichs-Triggersignal (WDT*) angestoßen wird.

2. Steuerung (1) nach Anspruch 1, dadurch gekennzeichnet, daß bei negativem Vorzeichen der Differenzzeit (t₂) das Abgleichs-Triggersignal (WDT*) zusätzlich zu dem Triggersignal (WDT) und nach diesem an die Überwachungsschaltung (3) abgegeben wird.

3. Steuerung (1) nach Anspruch 1, dadurch gekennzeichnet, daß bei positivem Vorzeichen der Differenzzeit (t₂) das Abgleichs-Triggersignal (WDT*) anstelle des Triggersignals (WDT) an die Überwachungsschaltung (3) abgegeben wird.

## Claims

1. Controller (1), in particular for a motor vehicle locking system, having a microprocessor (2) and a monitoring circuit (3) by means of which the microprocessor (2) is reset into a defined initial state in the event of faulty operation and which is activated by the microprocessor (2), at predetermined time intervals, by a trigger signal (WDT), characterized
- in that the time duration (t₁) between two reset signals of the monitoring circuit (3) is measured by the microprocessor (2) and compared with a required time duration (t₃),
- in that the difference time (t₂) between the measured time duration (t₁) and the required time duration (t₃) is formed and
- in that the monitoring circuit (3) is activated by an equalizing trigger signal (WDT*) which shifts the difference time (t₂).

2. Controller (1) according to Claim 1, characterized in that, if the mathematical sign of the difference time (t₂) is negative, the equalizing trigger signal (WDT*) is emitted to the monitoring circuit (3) in addition to the trigger signal (WDT) and after it.

3. Controller (1) according to Claim 1, characterized in that, if the mathematical sign of the difference time (t₂) is positive, the equalizing trigger signal (WDT*) is emitted to the monitoring circuit (3) instead of the trigger signal (WDT).

## Revendications

1. Commande (1), en particulier destinée à un système de fermeture d'une voiture automobile, comportant un microprocesseur (2) et un circuit de surveillance par lequel le microprocesseur est replacé dans un état initial donné, en cas d'erreur de fonctionnement et qui est déclenché par un signal de déclenchement (WDT), à des intervalles prédéterminés donnés par le microprocesseur (2)
caractérisée en ce que,
- la durée (t₁) s'écoulant entre deux signaux de retour à l'état initial du circuit de surveillance (3) sont mesurés et comparés à une durée de consigne (t₃) par le microprocesseur (2),
- la différence (t₂) entre la durée (t₁) mesurée et la durée de consigne (t₃) est formée,
- et le circuit de surveillance (3) est déclenché par un signal de déclenchement (WDT*) de compensation décalé de la valeur de la différence (t₂).

2. Commande (1) selon la revendication 1, caractérisée en ce que, lorsque la différence (t₂) est négative, le signal de déclenchement (WDT*) de compensation est émis en plus du signal de déclenchement (WDT) et après celui-ci, vers le circuit de surveillance (3).

3. Commande (1) selon la revendication 1, caractérisée en ce que lorsque la différence (t₂) est positive, le signal de déclenchement (WDT*) de compensation est émis à la place du signal de déclenchement (WDT), vers le circuit de surveillance (3).
